# EUROPEAN PATENT APPLICATION

(11) **EP 4 342 291 A1**
(43) Date of publication of application: **27.03.2024**
(21) Application number: 23181701.6
(22) Date of filing: 27.06.2023
(51) Int. Cl.: A01K 1/00

(54) **A SUPPORT BASE FOR SUPPORTING AT LEAST ONE UPSTANDING MEMBER, AND A SYSTEM AND A METHOD FOR DIVIDING AN AREA INTO A PLURALITY OF ANIMAL ACCOMMODATING CUBICLES**

(30) Priority: 27.06.2022 IE S20220107
(71) Applicant: Spillane Precast Concrete Limited, County Tipperary E45 NP22 (IE)
(72) Inventor: Spillane, Barry, David, Cunnahurt, Nenagh, County Tipperary, (IE); Spillane, Robert, Martin, Greenlawn, Ballinaclough Road, Tyone, Nenagh, County Tipperary, (IE)
(74) Representative: Gorman, Francis Fergus

(57) **Abstract**

A system (1) for dividing an area (3) into a plurality of animal cubicles (5) comprises a plurality of elongated base members (37) of precast reinforced concrete laid on a floor (17) in the area (3) in end-to-end abutting relationship and longitudinally aligned in their length direction. Upper and lower carrier members (20, 21) comprising a plurality of spaced apart divider elements (25) extending sidewardly therefrom are secured to upstanding members (18) extending from the base members (37) with the divider elements (25) defining the cubicles (5). Two downwardly converging spaced apart longitudinally aligned sockets (47) extend into each base member (37) for engaging lower portions (70) of the upstanding members (18) extending downwardly from respective securing flanges (54) secured to the upstanding members (18). The upstanding members (18) are secured to the base members (37) by the flanges (54). A grout accommodating slot (77) formed in each flange (54) accommodates liquid grouting into the corresponding socket (47) to fill an annular space (79) therein around the lower portion (70) of the upstanding member (18) therein.

## Description

The present invention relates to a system for dividing an area into a plurality of animal accommodating cubicles, and the invention also relates to a support base for supporting at least one upstanding member. The invention also relates to a method for dividing an area into a plurality of animal accommodating cubicles.

In some jurisdictions, animals, for example, dairy cows are wintered indoors in relatively large size animal houses. Such houses have a relatively large floor area, which typically is divided into elongated rows of animal accommodating cubicles, whereby the rows may be configured as a plurality of spaced apart single rows of cubicles, or the rows of cubicles may be arranged in pairs with the cubicles of each pair thereof being arranged head-to-head relative to each other to form a double row of head-to-head cubicles. In both cases, relatively wide walkways are provided between adjacent rows or between adjacent double rows of the cubicles, as the case may be, through which the animals may walk or exercise. An elongated bed is laid down on the floor of the animal house along and beneath each row of the cubicles on which the animals in the respective cubicles lie. The bed may comprise any suitable bedding material, for example, sand, wood chips, straw, paper, particulate plastics materials, or any other suitable material.

In general, adjacent cubicles are formed by divider elements constructed of tubular steel, tubular stainless steel or tubular plastics members, such as pipes of plastics material, with the divider elements spaced apart from each other and extending sidewardly from an elongated carrier member with adjacent pairs of divider elements defining the respective cubicles therebetween. The elongated carrier member in general, is supported on a plurality of spaced apart upstanding members, which are secured or grouted into the floor of the animal house.

The installation of such cubicles in such animal houses can be quite a tedious task, and indeed, a time consuming task. In general, the upstanding members for supporting the elongated carrier members from which the divider elements extend have to be grouted into the floor of the animal house. Since the floor of such houses in general is formed of concrete, it is necessary to form a plurality of spaced apart holes into the floor for engaging the lower ends of the upstanding members. The upstanding members must then be grouted into the holes formed in the concrete floor. It is essential that the upstanding members be accurately aligned along the length of the corresponding single row or double row of the cubicles so that the elongated carrier member from which the divider elements extend can be secured to the corresponding upstanding members. If an upstanding member is grouted into the floor of the animal house misaligned in the longitudinal direction of the row of single or double animal cubicles, in general, it is not possible to secure the elongated carrier member to that misaligned upstanding member. Thus, it is essential that the upstanding members must be in longitudinal alignment with each other.

The longitudinal alignment of the upstanding members is dependent firstly, on the accuracy with which the holes are formed in the concrete floor, which due to the nature of concrete is difficult, and secondly, the longitudinal alignment of the upstanding members is then dependent on the accuracy with which the upstanding members are grouted into the formed holes in the floor.

Apart from the difficulty of longitudinally aligning the upstanding members, the formation of the necessary holes in the concrete floor of the animal house and the grouting of the upstanding members into the holes, so that the upstanding members are accurately longitudinally aligned, is a relatively time consuming task. Furthermore, longitudinally misaligned upstanding members must be reset in the floor of the animal house.

There is therefore a need for a system for dividing an area into a plurality of animal accommodating cubicles which addresses this problem. There is also a need for a method for dividing an area into a plurality of animal accommodating cubicles which addresses this problem. Additionally, there is a need for a support base for supporting at least one upstanding member.

The present invention is directed towards providing such a support base for supporting at least one upstanding member, and the invention is also directed towards providing a system for dividing an area into a plurality of animal accommodating cubicles. Additionally, the invention is directed towards providing a method for dividing an area into a plurality of animal accommodating cubicles.

According to the invention there is provided a support base for supporting at least one upstanding member, the support base comprising an elongated base member of reinforced concrete having an upwardly facing first major surface and a downwardly facing second major surface, and having at least one socket for engaging the at least one upstanding member with the upstanding member extending upwardly from the base member, the at least one socket extending downwardly into the base member from the first major surface thereof.

In one embodiment of the invention each base member is precast, and preferably, is precast in a mould.

In another embodiment of the invention each socket terminates in the base member spaced apart upwardly from the second major surface, with a portion of the base member beneath the socket and between the socket and the second major surface forming a base of the socket.

In another embodiment of the invention the transverse cross-sectional area of each socket converges downwardly from the first major surface.

In one embodiment of the invention the transverse cross-section of each socket converges downwardly and defines a cone angle in the range of 2° to 10°, and preferably, in the range of 3° to 9°, and advantageously, the transverse cross-section of each socket converges downwardly from the first major surface and defines a cone angle of approximately 6°.

In another embodiment of the invention the transverse cross-section of each socket adjacent a lower end thereof is just greater than the transverse cross-section of a portion of the upstanding member adapted to engage the socket.

In one embodiment of the invention each socket extends into the base member from the first major surface thereof to a depth in the range of 50% to 90% of the depth of the base member between the first and second major surfaces thereof. Preferably, each socket extends into the base member from the first major surface thereof to a depth in the range of 65% to 80% of the depth of the base member between the first and second major surfaces thereof, and advantageously, each socket extends into the base member from the first major surface thereof to a depth of approximately 77% of the depth of the base member between the first and second major surfaces thereof.

In another embodiment of the invention each socket is configured to receive grouting between the portion of the upstanding member located in the socket and the base member.

In another embodiment of the invention two of the sockets are formed in the base member spaced apart from each other, and preferably, the sockets are located in the base member along a line extending parallel to the length direction of the base member.

In one embodiment of the invention the first major surface of the base member defines a centreline extending longitudinally in the length direction of the base member, the centreline being equi-spaced apart from respective opposite elongated side edges of the base member.

In another embodiment of the invention the line along which the sockets are located in each base member extends parallel to the centreline thereof and is offset to one side of the centreline.

In one embodiment of the invention at least one first fixing element accommodating bore extends into the base member from the first major surface thereof spaced apart from a corresponding one of the sockets for receiving a fixing element adapted to secure a securing flange extending sidewardly from a corresponding one of the upstanding members located in the socket to the base member with the flange abutting the first major surface of the base member.

In another embodiment of the invention a pair of the first fixing element accommodating bores are located spaced apart circumferentially around the corresponding socket, and preferably, at least three first fixing element accommodating bores are located spaced apart circumferentially around the corresponding socket, and ideally, four first fixing element accommodating bores are located spaced apart circumferentially around the corresponding socket. Preferably, the first fixing element accommodating bores are equi-spaced apart circumferentially around the corresponding socket.

In one embodiment of the invention each first fixing element accommodating bore is defined by a first threaded insert located in the base member, and preferably, each first threaded insert defines an internally threaded bore adapted to receive a standard threaded bolt.

In one embodiment of the invention each socket in the base member is configured to receive grouting material through a grout accommodating opening in the securing flange of the corresponding upstanding member.

In another embodiment of the invention four second fixing element accommodating bores extend into the base member from the second major surface thereof for accommodating second fixing elements therein for securing ground engaging pads to the second major surface of the base member

Preferably, the four second fixing element accommodating bores extend into the base member from the second major surface thereof and extend into the base member at locations towards but spaced apart inwardly from respective corresponding corners of the base member, and advantageously, each ground engaging pad comprises a resilient or a hard rubber material, and preferably, a rubber material.

In one embodiment of the invention each second fixing element accommodating bore is defined by a second threaded insert located in the base member, and preferably, each second threaded insert defines an internally threaded bore adapted to receive a standard threaded bolt.

In one embodiment of the invention at least one third fixing element accommodating bore is provided in the base member extending inwardly into the base member from at least one minor side surface thereof for accommodating a fixing element for securing a corresponding floor engaging bracket to the base member, and preferably, a pair of third fixing element accommodating bores are provided, one of the third fixing element accommodating bores extending into the base member from one of the minor side surfaces thereof, and the other one of the third fixing element accommodating bores extending into the base member from the other one of the minor side surfaces thereof. Preferably, a pair of the third fixing element accommodating bores are provided extending into the base member from each minor side surface thereof, and advantageously, are located towards but spaced apart inwardly from the respective ends of the minor side surface.

In one embodiment of the invention each third fixing element accommodating bore is defined by a third threaded insert located in the base member, and preferably, each third threaded insert defines an internally threaded bore adapted to receive a standard threaded bolt.

In another embodiment of the invention the support base comprises at least one of the upstanding members secured in a corresponding one of the sockets, and extending upwardly from the first major surface of the base member.

In another embodiment of the invention the upstanding member defines a plug element adjacent a lower end thereof, and preferably, the plug element is engageable with the corresponding socket.

In another embodiment of the invention the upstanding member comprises one of the securing flanges extending sidewardly from the upstanding member towards the lower end thereof, and preferably, the portion of the upstanding member extending therefrom from the securing flange defines the plug element.

In another embodiment of the invention the securing flange extends circumferentially around the upstanding member, and preferably, extends completely around the upstanding member.

In another embodiment of the invention the securing flange is provided with at least one first fixing element accommodating opening for accommodating a fixing element therethrough. Preferably, the at least one of the first fixing element accommodating openings is alignable with the at least one of the first fixing element accommodating bores of the base member.

Preferably, at least two first fixing element accommodating openings are provided, and preferably, the at least two first fixing element accommodating openings are alignable with the at least two of the first fixing element accommodating bores in the base member. Preferably, at least three fixing element accommodating openings are provided in the securing flange, and preferably, the first fixing element accommodating openings are alignable with corresponding ones of the first fixing element accommodating bores in the base member.

In another embodiment of the invention four first fixing element accommodating openings are provided extending through the flange, and preferably, the four first fixing element accommodating openings are alignable with corresponding ones of the first fixing element accommodating bores in the base member.

In another embodiment of the invention the securing flange of the at least one upstanding member defines an abutment face which when the securing flange is secured to the base member, the abutment face of the securing flange abuts the first major surface of the base member.

In another embodiment of the invention a grout accommodating opening is formed in the flange for accommodating grouting material into the socket for grouting the upstanding member in the socket, and preferably, the grout accommodating opening is configured to accommodate liquid grout into the socket.

Preferably, the grout accommodating opening in the securing flange extends into the securing flange from a central bore extending through the securing flange for accommodating the upstanding member therethrough.

In another embodiment of the invention the upstanding member is secured to the base member by a fixing element extending through a corresponding one of the first fixing element accommodating openings in the securing flange and into the corresponding one of the first fixing element accommodating bores in the base member. Preferably, each fixing element comprises a standard bolt.

In another embodiment of the invention the base member comprises four of the ground engaging pads secured to the second major surface thereof by respective fixing elements secured in the second fixing element accommodating bores of the base member.

Preferably, each ground engaging pad comprises a pad of a resilient or a hard material, and preferably, a resilient or a hard plastics or polymer material, or alternatively, a rubber material, and preferably, a hard rubber material.

The invention also provides a system for dividing an area into a plurality of animal accommodating cubicles, the system comprising a plurality of divider elements carried on and extending sidewardly from at least one elongated carrier member, the divider elements being spaced apart from each other and defining the respective animal accommodating cubicles therebetween, at least two spaced apart upstanding members supporting the carrier member, the at least two upstanding members being longitudinally aligned in a direction parallel to the at least one carrier member and extending upwardly from respective base supports, the base supports comprising respective elongated base members longitudinally aligned in their length direction and extending parallel to the at least one carrier member, each base member being of reinforced concrete and having an upwardly facing first major surface and a downwardly facing second major surface, and having at least one socket for engaging one of the at least one upstanding members with the upstanding member extending upwardly from the base member, the at least one socket extending downwardly into the base member from the first major surface thereof.

Further, the invention provides a system for dividing an area into a plurality of animal accommodating cubicles, the system comprising a plurality of divider elements carried on and extending sidewardly from at least one elongated carrier member, the divider elements being spaced apart from each other and defining the respective animal accommodating cubicles therebetween, and at least two spaced apart upstanding members supporting the at least one carrier member, the at least two upstanding members being longitudinally aligned in a direction parallel to the at least one carrier member, wherein the upstanding members extend upwardly from respective support bases, the support bases comprising respective elongated base members longitudinally aligned in their length direction and extending parallel to the at least one carrier member, each base member being of reinforced concrete and having an upwardly facing first major surface and a downwardly facing second major surface, and having at least one socket extending downwardly into the base member from the first major surface thereof, and each one of the upstanding members engages a corresponding one of the sockets and extends upwardly from the corresponding base member.

In one embodiment of the invention each socket terminates in the corresponding base member spaced apart upwardly from the second major surface, with a portion of the base member beneath the socket and between the socket and the second major surface forming a base of the socket.

In another embodiment of the invention the transverse cross-sectional area of each socket converges downwardly from the first major surface.

In another embodiment of the invention the transverse cross-section of each socket adjacent a lower end thereof is just greater than the transverse cross-section of a portion of the corresponding upstanding member engaging the socket.

In another embodiment of the invention each socket is configured to receive grouting between the portion of the corresponding upstanding member located in the socket and the base member.

In another embodiment of the invention a pair of sockets are formed in the base member spaced apart from each other, and preferably, the sockets are located in the base member along a line extending parallel to the length direction of the base member.

In one embodiment of the invention the first major surface of the base member defines a centreline extending longitudinally in the length direction of the base member, the centreline being equi-spaced apart from respective opposite elongated side edges of the base member.

In another embodiment of the invention the line along which the sockets are located in each base member extends parallel to the centreline thereof and is offset to one side of the centreline.

In another embodiment of the invention each upstanding member defines a plug element adjacent a lower end thereof for engaging one of the sockets in a corresponding one of the base members.

In another embodiment of the invention a securing flange extends sidewardly from each upstanding member towards but spaced apart from the lower end thereof, and preferably, the portion of the upstanding member extending therefrom from the securing flange defines the plug element.

In another embodiment of the invention the securing flange extends circumferentially around the upstanding member, and preferably, extends completely around the upstanding member.

In one embodiment of the invention at least one first fixing element accommodating bore extends into the base member from the first major surface thereof spaced apart from a corresponding one of the sockets for receiving a fixing element for securing the securing flange of a corresponding one of the upstanding members to the base member with the flange abutting the first major surface of the base member.

In another embodiment of the invention at least two first fixing element accommodating bores are located spaced apart circumferentially around the corresponding one of the sockets, and preferably, at least three first fixing element accommodating bores are located spaced apart circumferentially around the socket, and ideally, four first fixing element accommodating bores are located spaced apart circumferentially around the socket. Preferably, the first fixing element accommodating bores are equi-spaced apart circumferentially around the socket.

In one embodiment of the invention each first fixing element accommodating bore is defined by a first threaded insert located in the base member, and preferably, each first threaded insert defines an internally threaded bore adapted to receive a standard threaded bolt.

In another embodiment of the invention the securing flange of each upstanding member is provided with at least one first fixing element accommodating opening for accommodating a fixing element therethrough. Preferably, the first fixing element accommodating opening is alignable with a corresponding one of the at least one of the first fixing element accommodating bores of a corresponding one of the base members for securing the securing flange to the base member.

Preferably, at least two first fixing element accommodating openings are provided through each securing flange, and preferably, the at least two first fixing element accommodating openings are alignable with two corresponding first fixing element accommodating bores in the corresponding base member. Preferably, at least three fixing element accommodating openings are provided through each securing flange, and preferably, the first fixing element accommodating openings are alignable with corresponding first fixing element accommodating bores in the corresponding base member.

In another embodiment of the invention four first fixing element accommodating openings are provided extending through each securing flange, and preferably, the four first fixing element accommodating openings are alignable with corresponding ones of the first fixing element accommodating bores in the corresponding base member.

In another embodiment of the invention the securing flange of each upstanding member defines an abutment face which when the securing flange is secured to the corresponding one of the base members, the abutment face of the securing flange abuts the first major surface of the base member.

In another embodiment of the invention each upstanding member is secured to the corresponding base member by at least one fixing element extending through a corresponding one of the first fixing openings in the securing flange thereof and into the corresponding first fixing element accommodating bores in the base member. Preferably, each fixing element comprises a standard threaded bolt.

In another embodiment of the invention a grout accommodating opening is formed in the securing flange of each upstanding member for accommodating grouting material into the corresponding socket of the corresponding base member for grouting the upstanding member in the socket, and preferably, the grout accommodating opening is configured to accommodate liquid grout into the socket after the upstanding member has been secured in the socket by securing the securing flange of the upstanding member to the base member.

Preferably, the grout accommodating opening in each securing flange extends into the securing flange from a central bore extending therethrough for accommodating the upstanding member therethrough.

In another embodiment of the invention four ground engaging pads are secured to the second major surface of each base member. Preferably, the ground engaging pads are secured to the corresponding base member adjacent but spaced apart inwardly from respective corners of the base member. Preferably, each ground engaging pad comprises a pad of a resilient or a hard material, and preferably, a resilient or a hard plastics or polymer material, or alternatively, a rubber material, and preferably, a hard rubber material.

In another embodiment of the invention four second fixing element accommodating bores extend into each base member from the second major surface thereof for accommodating fixing elements therein for securing the respective ground engaging pads to the second major surface of the base member.

Preferably, the four second fixing element accommodating bores are located on the second major surface of the corresponding base member towards but spaced apart inwardly from the respective corresponding corners of the base member.

In one embodiment of the invention each second fixing element accommodating bore is defined by a second threaded insert located in the base member, and preferably, each second threaded insert defines an internally threaded bore adapted to receive a standard threaded bolt.

In one embodiment of the invention at least one third fixing element accommodating bore is provided in each base member extending inwardly from at least one minor side surface thereof for accommodating a fixing element for securing a floor engaging bracket to the base member, and preferably, a pair of third fixing element accommodating bores are provided, one of the third fixing element accommodating bores extending inwardly into the corresponding base member from one of the minor side surfaces thereof, and the other one of the third fixing element accommodating bores extending into the base member from the other one of the minor side surfaces thereof.

In another embodiment of the invention each minor side surface of each base member is provided with two third fixing element accommodating bores located towards but spaced apart inwardly from the corresponding end of the base member.

In one embodiment of the invention each third fixing element accommodating bore is defined by a third threaded insert located in the base member, and preferably, each third threaded insert defines an internally threaded bore adapted to receive a standard threaded bolt.

In another embodiment of the invention each base member comprises at least one floor engaging bracket secured thereto by a fixing element engaged in a corresponding one of the third fixing element accommodating bores.

In another embodiment of the invention at least one of the floor engaging brackets is configured for securing to two adjacent base members.

The invention also provides a support base for supporting at least one or two of the upstanding members of the system for dividing an area into a plurality of animal accommodating cubicles.

Additionally, the invention comprises an animal house comprising the system according to the invention for dividing an area into a plurality of animal accommodating cubicles.

The invention also provides a method for dividing an area into a plurality of animal accommodating cubicles, the method comprising providing an elongated carrier member and a plurality of divider elements extending sidewardly from the carrier member at spaced apart intervals along the carrier member to define animal accommodating locations therebetween, supporting the carrier member on at least two spaced apart upstanding members, wherein at least two support bases each having at least one socket formed therein are sequentially and longitudinally aligned and configured to extend parallel to the carrier member, and the at least two upstanding members are secured in and extend upwardly from the respective support bases, with each upstanding member engaged and secured in a corresponding one of the sockets.

Further, the invention provides a method for dividing an area into a plurality of animal accommodating cubicles, the method comprising providing a plurality of divider elements carried on and extending sidewardly from at least one elongated carrier member, the divider elements being spaced apart from each other and defining the respective animal accommodating cubicles therebetween, supporting the at least one carrier member on at least two spaced apart upstanding members, wherein at least two support bases are provided comprising respective elongated base members, each base member being of reinforced concrete and having an upwardly facing first major surface and a downwardly facing second major surface and having at least one socket extending downwardly into the base member from the first major surface thereof, placing the base members on a floor of the area longitudinally aligned in their length direction and extending parallel to the at least one carrier member, and engaging the at least two upstanding members in the sockets of the respective base members with the upstanding members extending upwardly from the base members.

In one embodiment of the invention each support base is formed as an elongated base member of reinforced concrete material, the at least one socket being formed in the base member during forming thereof with the at least one socket extending into the base member from a first major surface thereof.

The invention also provides a method for providing a support base for supporting an upstanding member, the method comprising casting the support base in a mould of reinforced concrete, and forming at least one socket in the support base during forming thereof for receiving the upstanding member with the sockets extending into the support base from a first major surface thereof.

The invention will be more clearly understood from the following description of some embodiments thereof which are given by way of example only with reference to the accompanying drawings, in which:
Fig. 1 is a perspective view of an animal house according to the invention comprising a system also according to the invention for dividing an area in the animal house into a plurality of animal accommodating cubicles,
Fig. 2 is a perspective view of a portion of the system of Fig. 1,
Fig. 3 is an enlarged perspective view of a detail of the system of Fig. 2,
Fig. 4 is an end elevational view of the system of Fig. 1,
Fig. 5 is a perspective view of a support base also according to the invention of the system of Fig. 1,
Fig. 6 is an underneath perspective view of the support base of Fig. 5,
Fig. 7 is an exploded perspective view of the support base of Fig. 5,
Fig. 8 is a top plan view of the support base of Fig. 5,
Fig. 9 is a side elevational view of the support base of Fig. 5,
Fig. 10 is an end elevational view of the support base of Fig. 5,
Fig. 11 is a cross-sectional side elevational view of the support base of Fig. 5 on the line XI-XI of Fig. 8,
Fig. 12 is an enlarged cross-sectional side elevational view of a detail of the system of Fig. 1,
Fig. 13 is a perspective view of a detail of the system of Fig. 1,
Fig. 14 is a perspective view of a system according to another embodiment of the invention for dividing an area of an animal house also according to the invention into a plurality of animal accommodating cubicles,
Fig. 15 is an end elevational view of the system of Fig. 14,
Fig. 16 is a top plan view of a support base also according to the invention of the system of Fig. 14,
Fig. 17 is a side elevational view of the support base of Fig. 16, and
Fig. 18 is an end elevational view of the support base of Fig. 16.

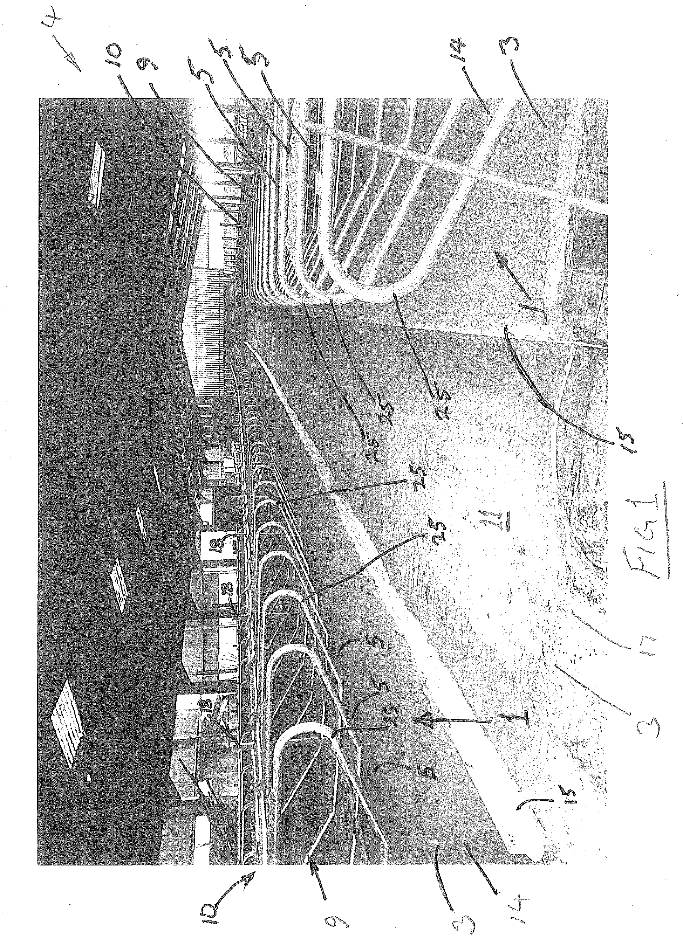

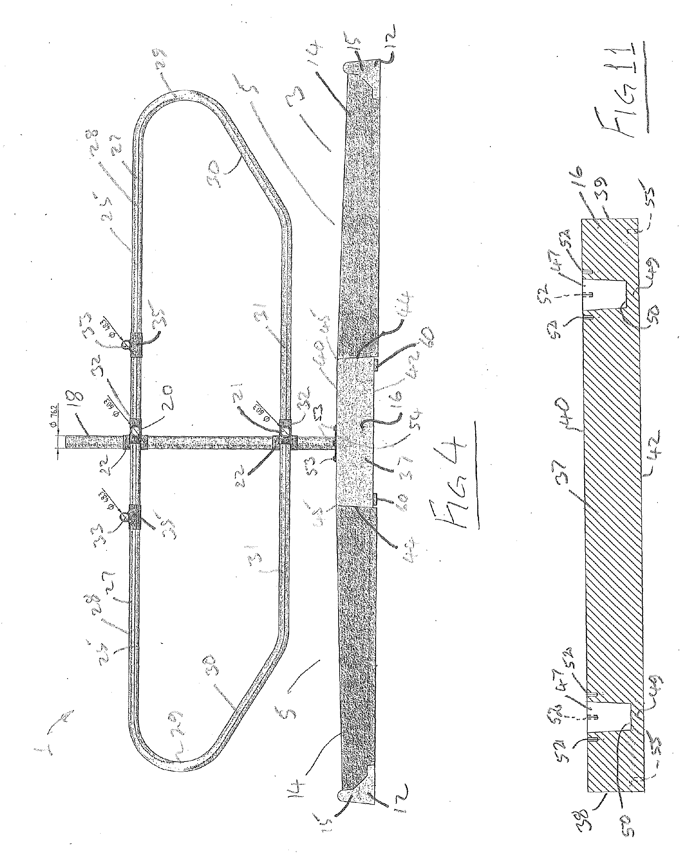

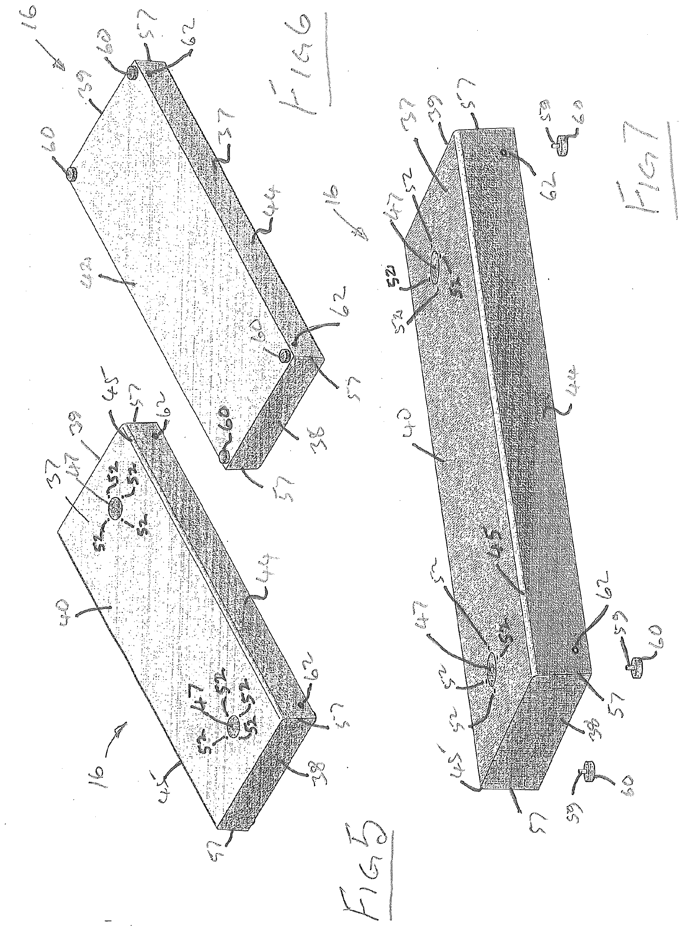

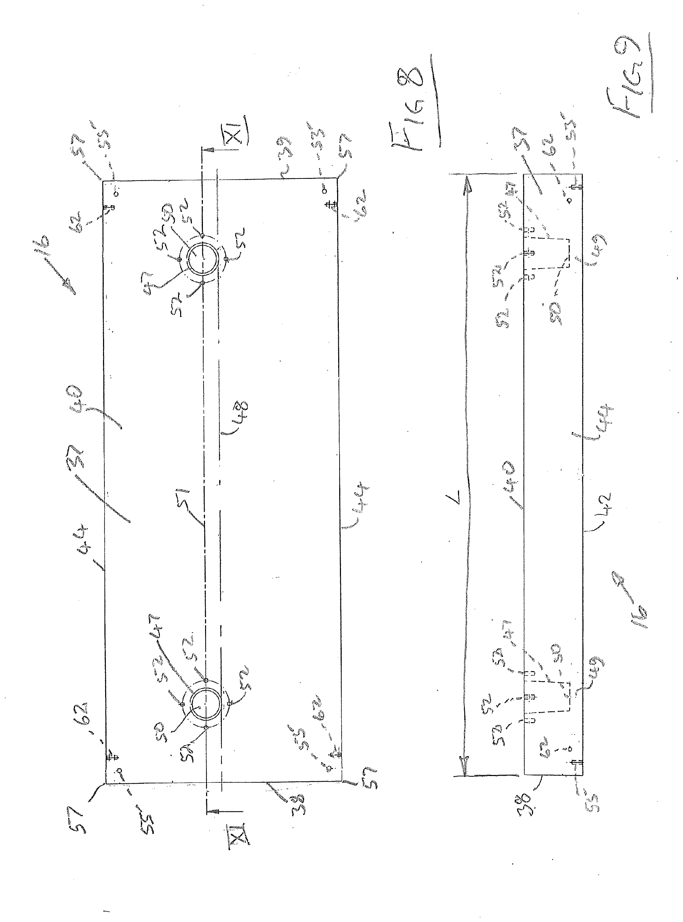

Referring to the drawings and initially to Figs. 1 to 13 thereof, there is illustrated a system according to the invention indicated generally by the reference numeral 1 for dividing an area 3 of an intensive animal accommodating house, also according to the invention and indicated generally by the reference numeral 4 into a plurality of animal accommodating cubicles 5 for accommodating animals in the animal house 4. The animal house 4 is partly enclosed, and comprises a plurality of parallel spaced apart rows 9 of the cubicles 5 of the system 1. In this embodiment of the invention the rows 9 of the cubicles 5 are arranged in double rows 10, with adjacent rows 9 of each double row 10 arranged head-to-head with each other. Each double row 10 of rows 9 are spaced apart from each other to form a walkway 11 between the double rows 10 to allow the animals to walk therethrough and to exercise. The areas 3 in the animal house 4 in which the cubicles 5 are formed comprise a bed 14 on which the animals may lie down. The bed 14 may comprise any suitable bedding material, for example, sand, straw, wood chips, paper and the like. Spaced apart elongated kerbs 15 extend along each side of the walkway 11 and define the walkway 11. Each kerb 15 defines one edge of the bed 14. The kerbs 15 are formed from a plurality of elongated precast reinforced concrete kerb elements 12 of length of approximately 2,286mm. Such animal accommodating houses as the animal accommodating house 4 with double rows 10 of rows 9 of cubicles 5 with such beds 14 will be known to those skilled in the art, and further description of the animal house 4 should not be required.

Turning now to the system 1 which forms the cubicles 5, the system 1 comprises a plurality of longitudinally aligned elongated support bases also according to the invention and indicated generally by the reference numeral 16 placed sequentially on the floor 17 of the animal house 4 in each area 3 in end-to-end abutting relationship. The support bases 16 extend parallel to the kerbs 15 defining the corresponding beds 14 therebetween, and are equi-spaced apart from the respective corresponding kerbs 15. The support bases 16 will be described in more detail below. A plurality of longitudinally aligned and longitudinally spaced apart upstanding members 18 of circular cross-section tubular steel, tubular stainless steel or tubular plastics material, such as a plastics pipe, are secured in the support bases 16 and extend upwardly therefrom. A pair of elongated spaced apart parallel carrier members of circular cross-section tubular steel, tubular stainless steel or tubular plastics material, namely, an upper carrier member 20 and a lower carrier member 21 extend horizontally and are secured to the upstanding members 18 by corresponding coupling brackets 22. In this embodiment of the invention the upstanding members 18 and the upper and lower carrier members 20 and 21, respectively, are of galvanised coated tubular steel of circular cross-section.

A plurality of spaced apart divider elements 25 extend sidewardly from each side of the upper and lower carrier members 20 and 21 and are supported on the upper and lower carrier members 20 and 21 with the divider elements 25 on the respective opposite sides of the carrier members 20 and 21 defining the cubicles 5 therebetween of the respective rows 9 thereof. Each divider element 25 comprises a tubular member 27 of circular cross-section tubular steel, stainless steel or tubular plastics material shaped to extend from the upper carrier member 20 and return to the lower carrier member 21. In this embodiment of the invention the tubular member 27 of each divider element 25 comprises galvanised coated tubular steel of circular cross-section. The tubular member 27 of each divider element 25 forms an upper member 28 extending sidewardly from the upper carrier member 20 and is bent at 29 to extend downwardly and inwardly to form a downwardly inwardly extending member 30 which in turn transitions into a sidewardly extending lower member 31 extending to and secured to the lower carrier member 21. The upper and lower members 28 and 31 of each divider element 25 are secured to the upper and lower carrier members 20 and 21 respectively, by corresponding coupling brackets 32. An elongated bracing member 33 of circular cross-section tubular steel, tubular stainless steel or tubular plastics material extends longitudinally and parallel to the upper carrier member 20 and is secured to the upper member 28 of each divider element 25 by coupling brackets 35 for retaining the tubular members 27 of the respective divider elements 25 spaced apart from each other. In this embodiment of the invention the bracing members 33 are of galvanised coated tubular steel of circular cross-section.

Turning now to the support bases 16, each support base 16 comprises an elongated base member 37 of precast reinforced concrete extending between a first end 38 and a second end 39 and defining an upwardly facing first major surface 40, and a downwardly facing second major surface 42 extending between the first and second ends 38 and 39, and extending between opposite minor side surfaces 44. The first major surfaces 40 transition into the minor side surfaces 44 through radiused corners 45 extending longitudinally between the first and second ends 38 and 39. The minor side surfaces 44 of each base member 37 converge inwardly from the downwardly facing second major surface 42 to the upwardly facing first major surface 40 at an angle of approximately 87°. In this embodiment of the invention the overall length L of each base member 37 is approximately 2,286mm. The overall width *W* of each base member 37 is approximately 900mm across the downwardly second major surface 42, and the overall height H of each base member 37 is approximately 225mm.

Two sockets 47 are formed in each base member 37 during casting of the concrete in a suitable mould for receiving and securing a corresponding one of the upstanding members 18 therein as will be described below. Each socket 47 extends downwardly into the base member 37 from the first major surface 40 to a depth d of approximately 175mm, and terminates in the base member at a distance s of approximately 50mm from the downwardly facing second major surface 42, so that a portion 49 of the base member 37 beneath the socket 47 and between the socket 47 and the second major surface 42 forms a base 50 of the corresponding socket 47. Each socket 47 is of circular transverse cross-section, and converges downwardly towards the base 50 thereof defining a cone angle *θ* of approximately 6°. The diameter D1 of each socket 47 adjacent the first major surface 40 of the base member 37 in this embodiment of the invention is approximately 124mm and the diameter D2 of each socket 47 adjacent the corresponding base 50 thereof is approximately 106mm. The Diameter D2 of each socket 47 adjacent the base 50 thereof, is just greater than the outer diameter of the upstanding members 18 in order that the corresponding upstanding member 18 snugly engages in the base 50 of the socket 47. Each socket 47 accommodates grouting for grouting the corresponding upstanding member 18 in the socket 47, as will be described below.

In this embodiment of the invention each base member 37 defines a longitudinally extending centreline 48, and the sockets 47 of each base member 37 are aligned in a line 51 which is offset to one side of the centreline 48. In this embodiment of the invention the line 51 is offset by approximately 68mm from the centreline 48.

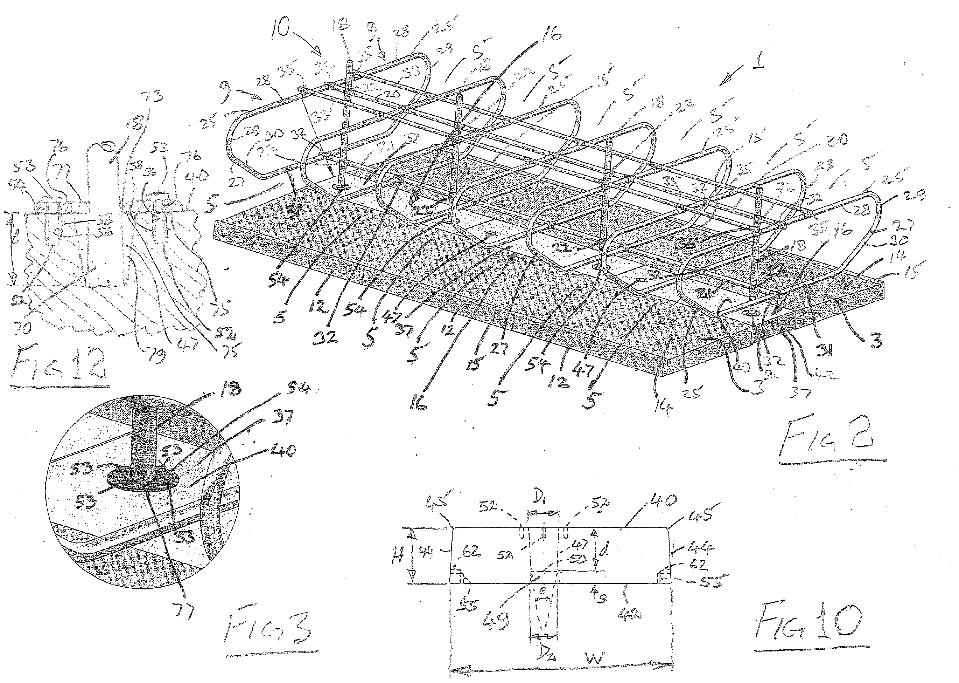

A plurality, in this embodiment of the invention four first fixing element accommodating bores 52 extend into each base member 37 from the first major surface 40 thereof spaced apart from and equi-spaced apart circumferentially around each socket 47. Each first fixing element accommodating bore 52 is defined by a threaded bore 56 of a first threaded steel insert 58, see Fig. 12, located in and cast into the base member 37 during casting thereof. Each first threaded insert is configured to receive and engage a corresponding fixing element, namely, a standard threaded bolt 53 therein for securing a securing flange 54 of the corresponding one of the upstanding members 18 to the base member 37 as will be described in more detail below.

A plurality in this embodiment of the invention four second fixing element accommodating bores 55 extending inwardly into the base member 37 from the second major surface 42 towards but spaced apart from respective corners 57 of the base member 37 defined between the minor side surfaces 44 and the corresponding first and second ends 38 and 39. The second fixing element accommodating bores 55 are similar to the first fixing element accommodating bores 52, and are provided by second threaded steel inserts (not shown), similar to the first threaded inserts 58, located in and cast into the base member 37 during casting thereof. The second fixing element accommodating bores 52 are provided for receiving standard threaded bolts 59 extending from ground engaging pads 60, in this embodiment of the invention of hard rubber material. The ground engaging pads 60 are of sufficient resilience to accommodate any unevenness in the floor 17 of the animal house 4 in order that each base member 37 is supported stably on the floor 17 of the animal house 4.

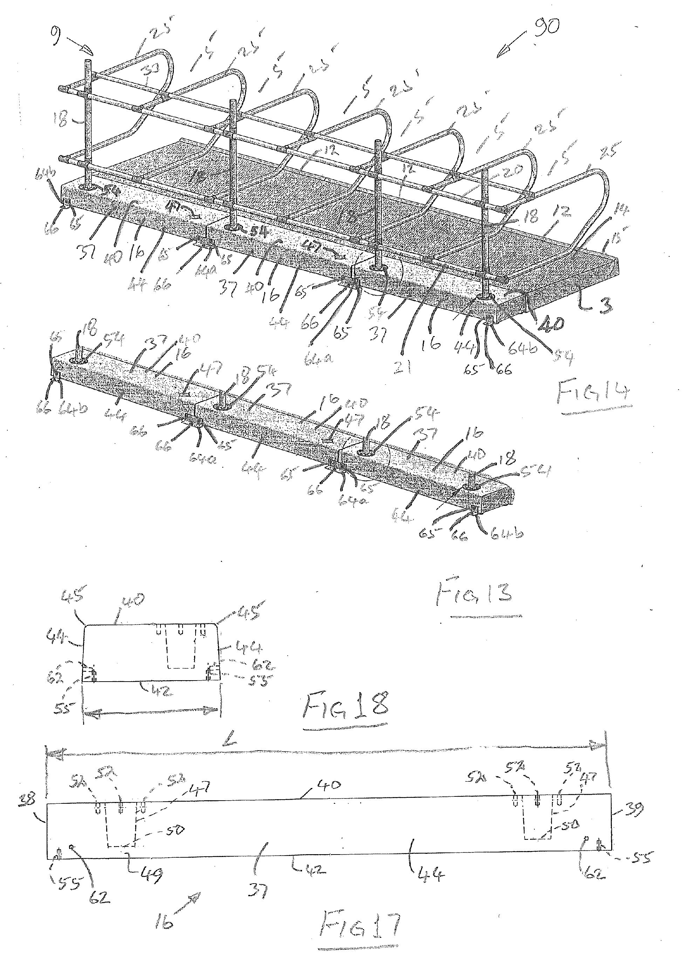

Two third fixing element accommodating bores 62 extend into each base member 37 from each of the two opposite minor side surfaces 44 thereof. The third fixing element accommodating bores 62 are similar to the first fixing element accommodating bores 52, and are provided by third threaded steel inserts (not shown) similar to the threaded inserts 58 described above, and are provided for receiving and engaging standard threaded bolts into the base member 37 for securing respective L-shaped floor engaging brackets 64 for securing the corresponding base member 37 to the floor 17 of the animal house 4. There are two types of floor engaging brackets 64, which are illustrated in Fig. 13, namely, a double floor engaging bracket 64a for securing to an adjacent pair of the base members 37 adjacent one of the minor side surfaces 44 thereof towards corresponding adjacent ones of the first and second ends 38 and 39 thereof, for in turn securing the adjacent base members 37 to the floor 17 of the animal house 4, and a single floor engaging bracket 64b for securing to one of the base members 37 adjacent one of the minor side surfaces 44 thereof towards one of the first and second ends 38 and 39 thereof for securing the base member 37 to the floor 17 of the animal house 4. Each single L-shaped bracket 64b comprises two fixing element accommodating openings 65 and 66 for accommodating respective standard threaded bolts, the openings 65 being provided to accommodate a bolt therethrough to engage the corresponding third fixing element accommodating bore 62 in the corresponding base member 37, and the opening 66 being provided to accommodate a masonry bolt for securing the base member 37 to the floor 17. The double L-shaped brackets 64a comprise two fixing element accommodating openings 65 to accommodate standard threaded bolts into the third fixing element accommodating bores 62 of an adjacent pair of the base members 37, and a single fixing element accommodating opening 66 for accommodating a masonry bolt for securing the two adjacent base members 37 to the floor of the animal house 4.

Returning now to the upstanding members 18, as mentioned above, each upstanding member 18 is of galvanised coated tubular steel of circular cross-section. The outer diameter of each upstanding member 18 is approximately 76mm, so that as discussed above, the upstanding member 18 engages the corresponding socket 47 in the corresponding one of the base members 37 with a reasonably snug fit adjacent the base 50 of the socket 47. Each upstanding member 18 comprises a corresponding securing flange 54 extending completely around the upstanding member 18. A portion of the upstanding member 18 extending from and below the securing flange 54 forms a plug 70 of length ℓ for engaging a corresponding one of the sockets 47 in a corresponding one of the base members 37. The length ℓ of the portion of the upstanding member 18 forming the plug 70 is slightly less than the depth d of each socket 47. A central bore 73 extending through the securing flange 54 accommodates the upstanding member 18 therethrough, and the securing flange 54 is secured to the upstanding member 18 by welding the securing flange 54 to the upstanding member 18 around the periphery of the central opening 73.

Each securing flange 54 defines an abutment face 75 for abutting the first major surface 40 of the corresponding base member 37 for tightly securing the upstanding member 18 in the corresponding socket 47. Four fixing element accommodating openings 76 equi-spaced apart circumferentially around the flange 54 extend through the flange 54 for accommodating the standard threaded bolts 53 therethrough into the first fixing element accommodating bores 52 located around the corresponding socket 47 of the corresponding base member 37 for securing the upstanding member 18 in the socket 47 and to the base member 37.

A grout accommodating opening, in this embodiment of the invention a grout accommodating slot 77 extends into each securing flange 54 from the central bore 73 for accommodating liquid grout into the socket 47 when the upstanding member 18 has been secured therein and to the base member 37 by the securing flange 54 and the standard threaded bolts 53. The liquid grout (not shown) is poured through the grout accommodating slot 77 to fill the annular space 79 extending around the plug 70 of the upstanding member 18 in the socket 47 for rigidly securing the plug 70 in the socket 47.

In use, the support bases 16 with the ground engaging pads 60 secured to the downwardly facing second major surfaces 42 of the base members 37 thereof, are laid sequentially longitudinally aligned in end-to-end abutting relationship, centrally along the area 3, along which the double row 10 of the cubicles 5 are to be erected. On the support bases 16 being longitudinally aligned with each other in the end-to-end abutting relationship, the L-shaped brackets 64 are then secured to the base members 37 of the support bases 16 by the standard threaded bolts (not shown) through the fixing element accommodating openings 65 of the L-shaped brackets 64 engaging the third fixing element accommodating bores 62. The single L-shaped brackets 64b are secured to the two base members 37 forming the support bases 16 at the respective opposite ends of the row 10 of the cubicles 5, and the double L-shaped brackets 64a are secured to adjacent pairs of end-to-end abutting base members 37. The brackets 64 are then secured to the floor by suitable masonry bolts (not shown) through the fixing element accommodating openings 66 thereof.

With the support bases 16 of the row secured to the floor, the upstanding members are secured to the support bases 16. Two upstanding members 18 are secured in the support bases 16 forming the support bases 16 at the respective opposite ends of the row of the support bases 16, and one upstanding member 18 is secured to each of the remaining support bases 16. To secure the upstanding members 18 to the support bases 16, the plug 70 of each upstanding member 18 is engaged in the corresponding socket 47. The securing flange 54 of each upstanding member 18 is secured to the base member 37 of the corresponding support base 16 by the standard threaded bolts 53 through the fixing element accommodating openings 76 in the securing flange 54, and in turn into the threaded inserts 58 of the first fixing element accommodating bores 52 in the base member 37 . With the upstanding members 18 secured by the securing flanges 54 to the support bases 16, liquid grouting is then poured into the corresponding sockets 47 through the grout accommodating slots 77 in the corresponding securing flanges 54 to fill the annular spaces 79 in the sockets 47 surrounding the plugs 70 of the corresponding upstanding members 18.

Thereafter, the upper and lower carrier members 20 and 21 with the divider elements 25 secured thereto, are secured to the upstanding members 18 by the coupling brackets 22. The bracing members 33 is then secured to the divider elements 25 by the coupling brackets 35.

The kerbs 15 are then sequentially and longitudinally laid on the floor 17 of the animal house 4 on respective opposite sides of the support bases 16 spaced apart from the support bases 16 and parallel thereto to define with the support bases 16 the areas 3 on opposite sides of the support bases 16. The areas 3 between the kerbs 15 are then filled with bedding material to form the beds 14 of the cubicles 5. The bedding material may be any suitable material, for example, bedding sand, wood chips, straw or any other suitable bedding material.

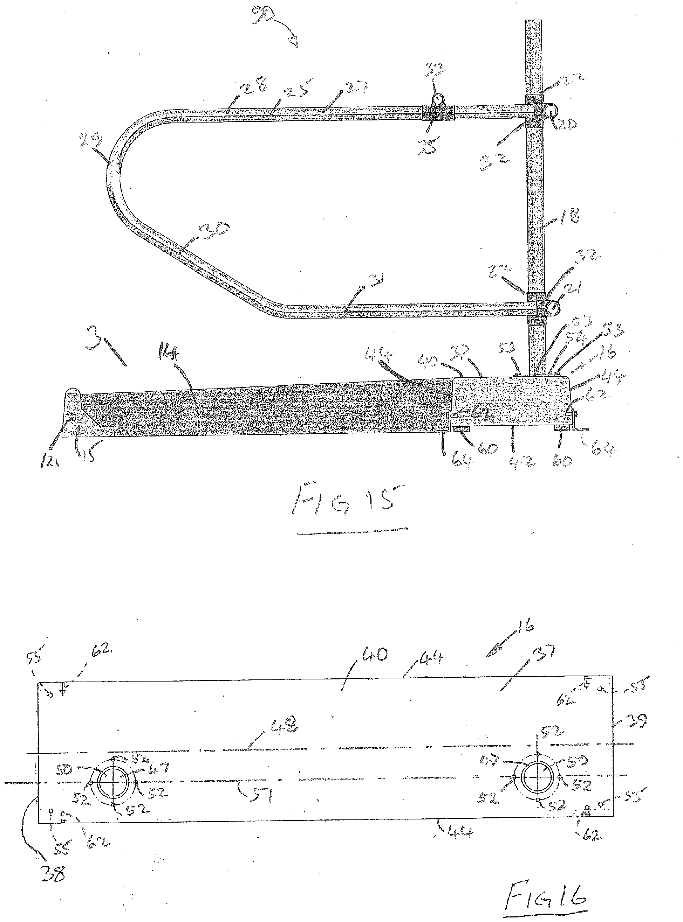

Referring now to Figs. 14 to 18 there is illustrated a system according to another embodiment of the invention indicated generally by the reference numeral 90 for dividing an area 3 of an animal house 4 into a single row 9 of animal accommodating cubicles 5. The system 90 is substantially similar to the system 1 and similar components are identified by the same reference numerals. The main difference between the system 90 and the system 1 is that the row 9 of the cubicles 5 is a single row of cubicles 5 as opposed to the double rows 10 of the cubicles 5 of the system 1. Accordingly, the divider elements 25 extend from the upper and lower carrier members 20 and 21 from one side only. The support bases 16 for supporting the upstanding members 18 which in turn support the carrier members 20 and 21 are substantially similar to the support bases 16 described with reference to the system 1, with the exception that the base members 37 of the respective support bases 16 are narrower between the longitudinally extending minor side surfaces 44 than the base members 37 of the system 1. In this embodiment of the invention the overall width *W* of the base member 37 of each support base 16 is approximately 560mm between the minor side surfaces 44 adjacent the downwardly facing second major surface 42, and is approximately 536mm between the minor side surfaces 44 adjacent the upwardly facing first major surface 40. In this embodiment of the invention the sockets 47 are aligned on the line 51, which in this embodiment of the invention is offset from the centreline 48 by approximately 160mm.

Otherwise, the system 90 and its use is similar to the system 1.

The advantages of the invention are many. One of the most important advantages of the invention is that it enables quick and precise installation of the systems in an animal house. When installed, the upstanding members are all longitudinally aligned so that the upper and lower carrier members 20 and 21 can be readily easily secured to the upstanding members 18 without any need for adjustment or realignment of the upstanding members 18. A particularly important advantage of the invention is that there is no need to dig out or otherwise form holes in the floor of the animal house since all that is required is to place the support bases 16 on the floor of the animal house in end-to-end abutting relationship longitudinally aligned with each other. Once the support bases are longitudinally aligned, the upstanding members 18 when engaged in the sockets 47 and secured to the base members 37 of the support bases 16, are in true longitudinal alignment with each other.

The systems according to the invention provide for quick and at the same time accurate installation of single and double rows of animal accommodating cubicles in an animal house with minimum site work required.

While the support bases have been described as comprising base members of specific dimensions, the base members may be of any other suitable dimensions. An advantage of providing the base members 37 of length of 2,286mm is that they can be efficiently shipped to the site where they are to be installed, and readily fit into a standard shipping container with the base members extending transversely across the shipping container.

Needless to say, the dimensions of the sockets and the base members may be different to those described, and while it is desirable it is not essential that the sockets converge downwardly from the first major surface of each base member. The sockets may be of cylindrical shape or of any other suitable cross-section, for example, square, rectangular, hexagonal or any other suitable cross-section. Similarly, the tubular member may also be of any other cross-section besides circular cross-section, for example, the tubular members may be of square, rectangular, hexagonal or any other suitable cross-section. Additionally, any number of sockets and any number of first fixing element accommodating bores may be provided in each base member, and in some embodiments of the invention it is envisaged that two or three first fixing element accommodating bores extending around each socket may be sufficient to secure the upstanding members 18 in the corresponding support base 16.

In some embodiments of the invention each base member may be provided with only one socket, while in other embodiments of the invention more than two sockets may be provided in each base member.

It will of course be appreciated that any other suitable shape and construction of divider elements and carrier members for defining the animal accommodating cubicles may be provided, and needless to say, the upstanding members, the carrier members and the divider elements may be of any other suitable material.

While the fixing element accommodating bores have been described as comprising threaded bores of threaded inserts, which are located in and cast into the base members during casting thereof, the fixing element accommodating bores may be formed by any other suitable means, and in some embodiments of the invention the fixing elements may comprise bores formed in the corresponding base member during casting thereof, and would be dimensioned and sized to receive a plug element, for example, a plug member of a plastics material, into which a suitable masonry bolt would be threadingly engaged in the plug member, and thereby secured in the corresponding fixing element accommodating bore.

## Claims

1. A support base (16) for supporting at least one upstanding member (18), the support base (16) comprising an elongated base member (37) of reinforced concrete having an upwardly facing first major surface (40) and a downwardly facing second major surface (42), and having at least one socket (47) for engaging the at least one upstanding member (18) with the upstanding member (18) extending upwardly from the base member (37), the at least one socket (47) extending downwardly into the base member (37) from the first major surface (40) thereof.

2. A support base (16) as claimed in Claim 1 **characterised in that** each socket (47) terminates in the base member (37) spaced apart upwardly from the second major surface (42), with a portion (49) of the base member (37) beneath the socket (47) and between the socket (47) and the second major surface (42) forming a base (50) of the socket (47), and preferably, the transverse cross-sectional area of each socket (47) converges downwardly from the first major surface (40), and advantageously, the transverse cross-section of each socket (47) adjacent a lower end (50) thereof is just greater than the transverse cross-section of a portion of the upstanding member (18) adapted to engage the socket (47), and preferably, at least one first fixing element accommodating bore (52) extends into the base member (37) from the first major surface (40) thereof spaced apart from a corresponding one of the sockets (47) for receiving a fixing element adapted to secure a securing flange (54) extending sidewardly from a corresponding one of the upstanding members (18) located in the socket (47) to the base member (37) with the flange (54) abutting the first major surface (40) of the base member (37).

3. A support base (16) as claimed in Claim 1 or 2 **characterised in that** four second fixing element accommodating bores (55) extend into the base member (37) from the second major surface (42) thereof for accommodating second fixing elements therein for securing ground engaging pads (60) to the second major surface (42) of the base member (37), and preferably, the second fixing element accommodating bores (55) extend into the base member (37) from the second major surface (42) at locations towards but spaced apart inwardly from respective corresponding corners (57) of the base member (37), and advantageously, each ground engaging pad (60) comprises a resilient or a hard rubber material, and preferably, a rubber material.

4. A support base (16) as claimed in Claim 2 or 3 **characterised in that** at least one of the upstanding members (18) is engaged in a corresponding one of the sockets (47) of the base member (37), and extends upwardly from the first major surface (40) thereof, and preferably, the upstanding member (18) comprises the securing flange (54) extending sidewardly therefrom towards a lower end thereof, a portion (70) of the upstanding member (18) extending from the securing flange (54) defining a plug element (70) engageable with the corresponding socket (47), and advantageously, the securing flange (54) is provided with at least one first fixing element accommodating opening (76) for accommodating the fixing element therethrough alignable with the at least one of the first fixing element accommodating bores (52) of the base member (37) for securing the securing flange (54) to the base member (37), and preferably, a grout accommodating opening (77) is formed in the securing flange (54) for accommodating grouting material into the socket (47) for grouting the upstanding member (18) in the socket (47).

5. A system for dividing an area (3) into a plurality of animal accommodating cubicles (5), the system comprising a plurality of divider elements (25) carried on and extending sidewardly from at least one elongated carrier member (20, 21), the divider elements (25) being spaced apart from each other and defining the respective animal accommodating cubicles therebetween, and at least two spaced apart upstanding members (18) supporting the at least one carrier member (20, 21), the at least two upstanding members (18) being longitudinally aligned in a direction parallel to the at least one carrier member (20, 21), **characterised in that** the upstanding members (18) extend upwardly from respective support bases (16), the support bases (16) comprising respective elongated base members (37) longitudinally aligned in their length direction and extending parallel to the at least one carrier member (20, 21), each base member (37) being of reinforced concrete and having an upwardly facing first major surface (40) and a downwardly facing second major surface (42), and having at least one socket (47) extending downwardly into the base member (37) from the first major surface (40) thereof, and each one of the upstanding members (18) engages a corresponding one of the sockets (47) and extends upwardly from the corresponding base member (37).

6. A system as claimed in Claim 5 **characterised in that** each socket (47) terminates in the corresponding base member (37) spaced apart upwardly from the second major surface (42), with a portion (49) of the base member (37) beneath the socket (47) and between the socket (47) and the second major surface (42) forming a base (50) of the socket (47).

7. A system as claimed in Claim 5 or 6 **characterised in that** the transverse cross-sectional area of each socket (47) converges downwardly from the first major surface (40).

8. A system as claimed in any of Claims 5 to 7 **characterised in that** the transverse cross-section of each socket (47) adjacent a lower end thereof is just greater than the transverse cross-section of the corresponding upstanding member (18) engaging the socket (47).

9. A system as claimed in any of Claims 5 to 8 **characterised in that** a pair of sockets (47) are formed in each base member (37) spaced apart from each other along a line (51) extending parallel to the length direction of the base member (37).

10. A system as claimed in any of Claims 5 to 9 **characterised in that** a securing flange (54) extends sidewardly from each upstanding member (18) towards but spaced apart from the lower end thereof, and a portion (70) of the upstanding member (18) extending from the securing flange (54) defines a plug element for engaging a corresponding one of the sockets (47).

11. A system as claimed in Claim 10 **characterised in that** at least one first fixing element accommodating bore (52) extends into the base member (37) from the first major surface (40) thereof spaced apart from a corresponding one of the sockets (47) for receiving a fixing element for securing the securing flange (54) of a corresponding one of the upstanding members (18) to the base member (37) with the flange (54) abutting the first major surface (40) of the base member (37).

12. A system as claimed in Claim 10 or 11 **characterised in that** a grout accommodating opening (77) is formed in the securing flange (54) of each upstanding member (18) for accommodating grouting material into the corresponding socket (47) of the corresponding base member (37) for grouting the upstanding member (18) in the socket (47).

13. A system as claimed in any of Claims 5 to 12 **characterised in that** four ground engaging pads (60) are secured to the second major surface (42) of each base member (37) adjacent but spaced apart inwardly from respective corners (57) thereof, and preferably, each ground engaging pad (60) comprises a pad of a resilient or a hard material, and advantageously, four second fixing element accommodating bores (55) extend into each base member (37) from the second major surface (42) thereof for accommodating fixing elements therein for securing the respective ground engaging pads (60) to the second major surface (42) of the base member (37).

14. A system as claimed in any of Claims 5 to 13 **characterised in that** at least one third fixing element accommodating bore (62) is provided in each base member (37) extending inwardly from at least one minor side surface (44) thereof for accommodating a fixing element for securing a floor engaging bracket (64) to the base member (37).

15. A method for dividing an area (5) into a plurality of animal accommodating cubicles (5), the method comprising providing a plurality of divider elements (25) carried on and extending sidewardly from at least one elongated carrier member (20, 21), the divider elements (25) being spaced apart from each other and defining the respective animal accommodating cubicles therebetween, supporting the at least one carrier member (20, 21) on at least two spaced apart upstanding members (18), **characterised in that** at least two support bases (16) are provided comprising respective elongated base members (37), each base member (37) being of reinforced concrete and having an upwardly facing first major surface (40) and a downwardly facing second major surface (42) and having at least one socket (47) extending downwardly into the base member (37) from the first major surface (40) thereof, placing the base members (37) on a floor (17) of the area (5) longitudinally aligned in their length direction and extending parallel to the at least one carrier member (20, 21), and engaging the at least two upstanding members (18) in the sockets (47) of the respective base members (37) with the upstanding members (18) extending upwardly from the base members (37).
